# EUROPEAN PATENT SPECIFICATION

(11) **EP 3 139 248 B1**
(45) Date of publication and mention of the grant of the patent: **14.08.2024**
(21) Application number: 15188367.5
(22) Date of filing: 05.10.2015
(51) Int. Cl.: H04M 1/72454, G06F 3/01

(54) **METHOD FOR GESTURE BASED HUMAN-MACHINE INTERACTION, PORTABLE ELECTRONIC DEVICE AND GESTURE BASED HUMAN-MACHINE INTERFACE SYSTEM**
VERFAHREN FÜR GESTENBASIERTE MENSCH-MASCHINE-INTERAKTION, TRAGBARE ELEKTRONISCHE VORRICHTUNG UND GESTENBASIERTES MENSCH-MASCHINE-SCHNITTSTELLENSYSTEM
PROCÉDÉ D'INTERACTION HOMME-MACHINE BASÉE SUR UN GESTE, DISPOSITIF ÉLECTRONIQUE PORTABLE ET SYSTÈME D'INTERFACE HOMME-MACHINE BASÉE SUR UN GESTE

(30) Priority: 04.09.2015 US 201562214684 P
(43) Date of publication of application: 08.03.2017
(73) Proprietor: ams AG, 8141 Premstätten (AT)
(72) Inventor: Durix, Jean-Francois, 85386 Eching (DE); Plankensteiner, Friedrich, Hayward, CA 94542 (US)
(74) Representative: Epping - Hermann - Fischer

(56) References cited:
- US-A1- 2009 265 671
- US-A1- 2011 098 087
- US-A1- 2011 173 574
- US-A1- 2012 016 641
- DEY A K: "UNDERSTANDING AND USING CONTEXT", INTERNET CITATION, 23 February 2001 (2001-02-23), XP002188155, Retrieved from the Internet <URL:http://link.springer.de/link/service/journals/00779/papers/1005001/10050004.pdf> [retrieved on 10770223]

## Description

The invention relates to gesture based human-machine interaction, HMI, in general and in particular to a method for gesture based HMI, a portable device and a gesture based HMI system.

Gesture based HMI may be used to control an electronic device or a further device coupled to the electronic device. In particular, a gesture carried out by a user of the electronic device may be translated into a command carried out by the electronic device.

In existing approaches to gesture based HMI of an electronic device, detection of a plurality of gestures may be possible. However, in these approaches, the gesture detection and processing may not take into account specific situations.

This may lead to an increased power consumption and/or limited speed, reliability and/or accuracy of the gesture based HMI. Furthermore, flexibility and/or usability of the gesture based HMI may be limited in the existing approaches.

For example, document US 2011/0173574 A1 discloses a gesture-based system, wherein aspects of a computing environment or application are controlled by user gestures. The system has a plurality of modes including for example an application mode, an operating system mode, a gaming mode, an office mode or the like. A common set or subset of input gestures enables the user to interact with the system through different experiences with at least some of the same gestures. Gestures may be specific to a mode, such that if the user performs a particular gesture, the system recognizes to which mode the gesture should apply. The same gestures may be applicable in more than one mode.

Document US 2012/0016641 A1 describes a power efficient staged gesture recognition pipeline including multimodal interaction detection, context based optimized recognition, and context based optimized training and continuous learning.

Document US 2009/0265671 A1 describes processing motion to control a portable electronic device based on sensed motion data derived from motion sensors of the device and based on device movement in space. The motion sensors include at least three rotational motion sensors and at least three accelerometers. States of the device are changed based on the recognized gestures.

Document US 2011/0098087 A1 describes docks for mobile computing devices. For example, the mobile computing device may change a mode of operation depending on to which type of car dock it is connected. The mobile device may further be used as a game controller using a wireless connection to the dock.

It is therefore an object to provide an improved concept for gesture based human-machine interaction with an improved context awareness.

This object is achieved by the subject matter of the independent claims. Further implementations and embodiments are the subject matter of the dependent claims.

According to the improved concept, a gesture mode of an electronic device is selected according to an environmental status or context. For example, depending on whether the electronic device and/or the user or the electronic device is presently in a driving vehicle or whether the user is presently running or playing a game on the electronic device, a gesture mode being appropriately adapted to the respective environmental status or context is selected. The selected gesture mode has a corresponding set of gestures and commands associated to the gestures. In particular, the gestures and/or the associated commands may be appropriately adapted to the present environmental status or context.

According to the improved concept, a method for gesture based human-machine interaction, HMI, is provided. The method comprises determining an environmental status of an electronic device and operating the electronic device in one of at least two gesture modes depending on the environmental status. Therein, during a first gesture mode of the at least two gesture modes, detection of gestures of a first set of gestures is enabled. In particular, detection of gestures that are not comprised by the first set of gestures is disabled during the first gesture mode. The invention comprises detecting a movement of an object located in a vicinity of the electronic device.

The invention comprises, when operating in the first gesture mode, in particular when operating in the first gesture mode at a time when the movement of the object is detected, determining if the detected movement corresponds to a gesture of the first set of gestures. The invention comprises, if the detected movement corresponds to a gesture of the first set of gestures, carrying out a first command of the electronic device associated to the gesture corresponding to the detected movement.

A gesture is a defined movement or sequence of movements performed by one or more objects. The objects may include a body part, for example a hand, a finger, a leg, a foot, a head, or another body a part, of a person or an animal. The objects may also include an inanimate object.

The environmental status of the electronic device is determined by one or more relations of the electronic device with respect to the environment of the electronic device. Therein, the environment of the electronic device may comprise for example one or more further electronic devices, one or more external objects, a location of the electronic device and/or one or more environmental parameters for example at the location of the electronic device.

The first set of gestures comprises at least one gesture. Each gesture comprised by the first set of gestures has an associated first command, that is, a command being carried out if the movement of the object is detected during the first gesture mode and the detected movement corresponds to the respective gesture.

According to some implementations of the method, the environmental status is independent of a proximity, in particular a proximity of the electronic device to an external object, that is a distance between the external object, for example the object whose movement is detected, and the electronic device.

According to some implementations of the method, the first command is a command of the electronic device for controlling a component of the electronic device or coupled to the electronic device. In particular, the first command is a software command and/or a command for controlling an actuator of the electronic device or coupled to the electronic device.

According to some implementations of the method, the first command is an application programming interface, API, command of the electronic device's operating system, for example an HMI API command of the electronic device's operating system.

According to some implementations of the method, the electronic device is operated in the first gesture mode if at least one condition for the first gesture mode is fulfilled. The at least one condition for the first gesture mode depends on the environmental status.

The at least one condition for the first gesture mode comprises a first condition for the first gesture mode depending on the environmental status. The at least one condition for the first gesture mode may comprise also a second condition for the first gesture mode depending on the environmental status. In particular, the first and the second condition for the first gesture mode may depend on different aspects of the environmental status. The second condition for the first gesture mode may also be independent of the environmental status.

The at least one condition for the first gesture mode may for example be fulfilled if, in particular if and only if, all conditions of the at least one condition for the first gesture mode are fulfilled.

If the at least one condition for the first gesture mode is not fulfilled, the electronic device may be operated in a gesture mode of the at least two gesture modes being not the first gesture mode or may be operated in another operating mode.

If the at least one condition for the first gesture mode is fulfilled at a time when the electronic device is not operated in the first gesture mode, for example when the electronic device is operated in a gesture mode of the at least two gesture modes being not the first gesture mode or in another operating mode, the first gesture mode may be entered.

According to some implementations of the method, the at least one condition for the first gesture mode further depends on a user input to the electronic device and/or on a status of a process on the electronic device.

According to some implementations, the electronic device is for example operated in the first gesture mode if, in particular if and only if, the at least one condition for the first gesture mode is fulfilled with respect to the environmental status and with respect to the user input. The user input may for example correspond to a general enabling of the first gesture mode.

In this way, the first gesture mode may be generally enabled by the user input when the at least one condition for the first gesture mode is not, for example not yet, fulfilled with respect to the environmental status. If thereafter the at least one condition for the first gesture mode fulfilled with respect to the environmental status, the electronic device is for example operated in the first gesture mode. Alternatively or in addition, the first gesture mode may be enabled by the user input when the at least one condition for the first gesture mode is already fulfilled with respect to the environmental status. Then, the electronic device is for example operated in the first gesture mode upon the enabling by the user input.

In such implementations, the user input may generally enable the first gesture mode and, if generally enabled, the first gesture mode is automatically activated depending on the environmental status.

According to some implementations, the electronic device is for example operated in the first gesture mode if, in particular if and only if, the at least one condition for the first gesture mode is fulfilled with respect to the environmental status and with respect to the process on the electronic device. The process on the electronic device may for example be a software program that may be executed on the electronic device. The at least one condition for the first gesture mode is for example fulfilled with respect to the process on the electronic device, if the process is running on the electronic device, that is, for example if the software program is being started or executed on the electronic device.

In this way, the first gesture mode may be generally enabled by the process on the electronic device when the at least one condition for the first gesture mode is not, particular not yet, fulfilled with respect to the environmental status. If thereafter the at least one condition for the first gesture mode fulfilled with respect to the environmental status, the electronic device is for example operated in the first gesture mode. Alternatively or in addition, the first gesture mode may be enabled by the process when the at least one condition for the first gesture mode is already fulfilled respect to the environmental status. Then, the electronic device is for example operated in the first gesture mode directly after the enabling by the process.

According to some implementations, the electronic device is for example operated in the first gesture mode if, in particular if and only if, the at least one condition for the first gesture mode is fulfilled with respect to the environmental status, with respect to the user input and with respect to the process on the electronic device.

According to some implementations of the method, detection of gestures of a second set of gestures is enabled during a second gesture mode of the at least two gesture modes. The second set of gestures comprises at least one gesture.

In particular, detection of gestures that are not comprised by the second set of gestures is disabled during the second gesture mode.

The electronic device is operated in the first or in the second gesture mode depending on the environmental status. Consequently, depending on the environmental status, detection of the first or the second set of gestures may be enabled.

According to some implementations, the method further comprises, when operating in the second gesture mode and if the detected movement corresponds to a gesture of the second set of gestures, carrying out a second command of the electronic device associated to the gesture corresponding to the detected movement.

What was explained above with respect to the first command holds analogously for the second command.

Each gesture comprised by the second set of gestures has an associated second command, that is, a command being carried out if the movement of the object is detected during the second gesture mode and the detected movement corresponds to the respective gesture.

The second set of gestures may comprise one or more gestures that are comprised also by the first set. In this case, for the one or more gestures comprised by the second and by the first set, the respective associated first command may be equal to or different from the respective associated second command.

According to some implementations, the method further comprises operating the electronic device in the second gesture mode if at least one condition for the second gesture mode is fulfilled.

According to some implementations of the method, the at least one condition for the second gesture mode depends on at least one of the following: the environmental status, a user input to the electronic device and a status of a process on the electronic device.

The explanations with respect to the first gesture mode hold analogously also for the second gesture mode. A difference is, that the at least one condition for the first gesture mode necessarily depends on the environmental status, while the dependence of the at least one condition for the second gesture mode on the environmental status is optional.

The at least one condition for the second gesture mode may for example depend on the same aspects as the at least one condition for the first gesture mode or on different or partially different aspects of the environmental status.

The user input the at least one condition for the second gesture mode depends on may be the same or a different user input the at least one condition for the first gesture modes depends on. The process on the electronic device the at least one condition for the second gesture mode depends on may be the same or a different process the at least one condition for the first gesture modes depends on.

According to some implementations of the method, the first set of gestures is different from the second set of gestures.

According to some implementations of the method, the first set of gestures comprises at least one gesture that is not comprised by the second set of gestures and/or vice versa.

Consequently, detection of a certain gesture may be enabled during the first gesture mode and disabled during the second gesture mode and/or vice versa. In particular, detection may be enabled only for such gestures that are actually required during the corresponding gesture mode. This means, the enabling of detectable gestures may be context dependent, that is may be adapted to the environment of the electronic device and/or of a user of the electronic device, in particular may be adapted to the environmental status. In this way, speed, reliability and/or accuracy of gesture based HMI may be improved. Furthermore, power consumption of the electronic device may be reduced in this way.

According to some implementations of the method, at least one common gesture is comprised by the first set of gestures and is comprised by the second set of gesture. The first command associated to the at least one common gesture is different from the second command associated to the at least one common gesture.

This means that movement corresponding to one of the at least one common gesture may have a different effect when detected during the first gesture mode than when detected during the second gesture mode.

For example, the second command associated to the at least one common gesture may correspond to an HMI API command of the electronic device's operating system, while the first command associate to the at least one common gesture corresponds to an API command which is not an HMI API command of the electronic device's operating system or to another command.

The first command may have a similar effect as the second command, however, the processing of the first and the second command by the electronic device or the detailed effects may be different. Consequently, according to the improved concept, it is possible to associate the same common gesture to similar or related commands or effects or also to unrelated commands or effects. This may lead to an improved usability or controllability of the electronic device by means of gestures. In particular, the usage the control of the electronic device maybe simplified for a user of the electronic device in this way.

According to some implementations of the method, one of the at least two gesture modes is a deactivation mode and detection of gestures is disabled, for example is deactivated, during the deactivation mode, in particular when the electronic device is operated in the deactivation mode. The deactivation mode is for example an alternative operating mode to the remaining gesture modes of the at least two gesture modes.

According to some implementations, the method further comprises operating the electronic device in the deactivation mode if at least one deactivation is fulfilled.

According to some implementations, each gesture mode of the at least two gesture modes has at least one associated condition for which the electronic device is operated in the respective gesture mode. Therein, the at least one associated condition for the deactivation mode is given by the deactivation condition, the at least one associated condition for the first gesture mode is given by the at least one condition for the first gesture mode and the at least one associated condition for the second gesture mode is given by the at least one condition for the second gesture mode.

According to some implementations, the deactivation condition is fulfilled if none of the at least one associated condition for any other gesture mode of the at least two gesture modes is fulfilled. Alternatively or in addition, the deactivation condition may depend on the environmental status, a user input and/or a process on the electronic device.

According to some implementations, the at least one condition for the first gesture mode is fulfilled if none of the at least one associated condition of any other gesture mode, for example including the deactivation mode, of the at least two gesture modes is fulfilled.

According to some implementations, the at least one condition for the second gesture mode is fulfilled if none of the at least one associated condition of any other gesture mode, for example including the deactivation mode, of the at least two gesture modes is fulfilled.

In implementations with the deactivation mode, unnecessary gesture detection may be avoided, particular may be avoided automatically. Consequently, a power consumption of the electronic device may be reduced.

According to some implementations of the method, one of the at least two gesture modes is a power saving mode. During the power saving mode, in particular when the electronic device is operated in the power saving mode, detection of gestures is disabled, for example is deactivated. The power saving mode may for example be given by the deactivation mode.

According to the invention, the environmental status comprises information about one or more quantities measured by one or more further sensors coupled to or comprised by the electronic device.

According to some implementations, the one or more further sensors are implemented as environmental sensors, in particular are not implemented as gesture sensors. In some implementations, the one or more further sensors are not implemented as proximity sensors.

According to some implementations of the method, the one or more further sensors comprise a position sensor, a GPS sensor, a speed sensor, an acceleration sensor, a sensor for determining a biologic parameter, in particular of a user of the electronic device, a heart rate sensor, a temperature sensor, a humidity sensor, a pressure sensor, a microphone, a sound sensor, a camera and/or another environmental sensor.

According to some implementations, the environmental status comprises information about at least two different quantities measured by at least two sensors coupled to a comprised by the electronic device.

In this way, the relation of the electronic device with respect to its environment may be determined in a particularly distinct way. This may for example avoid operating the electronic device in the gesture mode of the at least two gesture modes that is not appropriate or not optimal according to the relation of the electronic device with its environment.

According to the invention, the environmental status comprises one or more connection statuses of the electronic device with a vehicle and/or with a component of the vehicle.

The one or more connection statuses may for example comprise a Bluetooth connection status, an NFC connection status, an infrared connection status, a wired connection status or another connection status of the electronic device with a further electronic device. The further electronic device may be for example at least one of: a vehicle such as a car, a vehicle electronics system, an audio system, for example a vehicle or car audio system, a vehicle or car entertainment system, a vehicle or car infotainment system, a gaming console and another electronic device.

In addition, the one or more connection statuses may comprise a connection status of the electronic device with a network, such as a mobile communication network. The mobile communication network may include a network according to GSM, GPRS, Edge, UMTS, HSDPA, LTE standard or a network based on one of these standards or another mobile communication standard. Alternatively or in addition, the one or more connection statuses may comprise a status about an internet connection and/or a Wi-Fi connection.

According to some implementations of the method, the first and/or the second set of gestures comprises at least one predefined gesture.

According to some implementations of the method, the first and/or the second set of gestures comprise at least one user defined gesture.

For defining the user defined gesture, a user of the electronic device may for example carry out a movement representing the user defined gesture, for example with a finger or a hand. The user defined gesture may then for example be associated, for example by the user, with a first command to be carried out, if the movement detected when operating in the first gesture mode corresponds to the user defined gesture. Alternatively or in addition, the user defined gesture may for example be associated, for example by the user, with a second command to be carried out, if the movement detected when operating in the second gesture mode corresponds to the user defined gesture.

The possibility to utilize the user defined gesture may for example be advantageous to improve usability of the electronic device with respect to gesture control by left-handed and right-handed users in equal measure.

According to some implementations of the method, during a further gesture mode of the at least two gesture modes, detection of gestures of a further set of gestures is enabled.

What was explained with respect to the second gesture mode holds analogously for the further gesture mode.

According to the improved concept also a portable electronic device with gesture based human-machine interaction is provided. The electronic device comprises at least one input unit configured to determine an environmental status of the electronic device and a gesture sensor configured to detect a movement of an object. The electronic device further comprises a processing unit configured to operate in one of at least two gesture modes depending on the environmental status and to enable detection of gestures of a first set of gestures during a first gesture mode of the at least two gesture modes. The processing unit is further configured to determine if the detected movement corresponds to a gesture of the first set of gestures when operating in the first gesture mode and, if the detected movement corresponds to a gesture of the first set of gestures, carry out a first command of the electronic device associated to the gesture corresponding to the detected movement.

According to some implementations, the portable electronic device is being implemented as at least one of the following: a mobile phone, a tablet computer, a notebook computer, a portable media player, a wearable electronic device, a smart watch, an electronic wrist band, a smart eyeglasses device and a headphone device.

According to some implementations of the portable electronic device, the gesture sensor is implemented as at least one of the following: an optical gesture sensor, an infrared gesture sensor, a camera, an ultrasound gesture sensor, a position sensor, an acceleration sensor, a touchscreen and a touchpad.

According to some implementations of the portable electronic device, the processing unit is further configured to enable detection of gestures of a second set of gestures during a second gesture mode of the at least two gesture modes.

According to some implementations, apart from the gesture sensor, the portable electronic device, in particular the at least one input unit, comprises one or more further sensors.

The environmental status comprises information about one or more quantities measured by the one or more further sensors.

According to some implementations, the portable electronic device, in particular the at least one input unit, comprises one or more connection interfaces, for example a Bluetooth interface. The environmental status comprises one or more connection statuses of the electronic device provided, for example provided to the processing unit, by the one or more connection interfaces.

Further implementations of the portable electronic device are readily derived from the various implementations and embodiments of the method according to the improved concept and vice versa.

According to the improved concept also a gesture based HMI system for an electronic device is provided. The HMI system comprises at least one input unit configured to determine an environmental status of the electronic device and a gesture sensor configured to detect a movement of an object. The HMI system further comprises a processing unit configured to operate in one of at least two gesture modes depending on the environmental status and to enable detection of gestures of a first set of gestures during a first gesture mode of the at least two gesture modes. The processing unit is further configured to determine if the detected movement corresponds to a gesture of the first set of gestures when operating in the first gesture mode and, if the detected movement corresponds to a gesture of the first set of gestures, carry out a first command of the electronic device and/or of the HMI system associated to the gesture corresponding to the detected movement.

The HMI system may be comprised by an electronic device, in particular a portable electronic device, for example a portable electronic device according to the improved concept.

Further implementations of the HMI system are readily derived from the various implementations and embodiments of the method and the portable electronic device according to the improved concept and vice versa.

In the following, the improved concept is explained in detail with the aid of exemplary implementations by reference to the drawings. Components that are functionally identical or have an identical effect may be denoted by identical references. Identical components and/or components with identical effects may be described only with respect to the figure where they occur first and their description is not necessarily repeated in subsequent figures.

In the drawings,
- Figure 1: shows a flowchart of an exemplary implementation of a method for gesture based human-machine interaction according to the improved concept;
- Figure 2: shows a flowchart of a further exemplary implementation of a method for gesture based human-machine interaction according to the improved concept; and
- Figure 3: shows a block diagram of an exemplary implementation of a portable electronic device according to the improved concept.

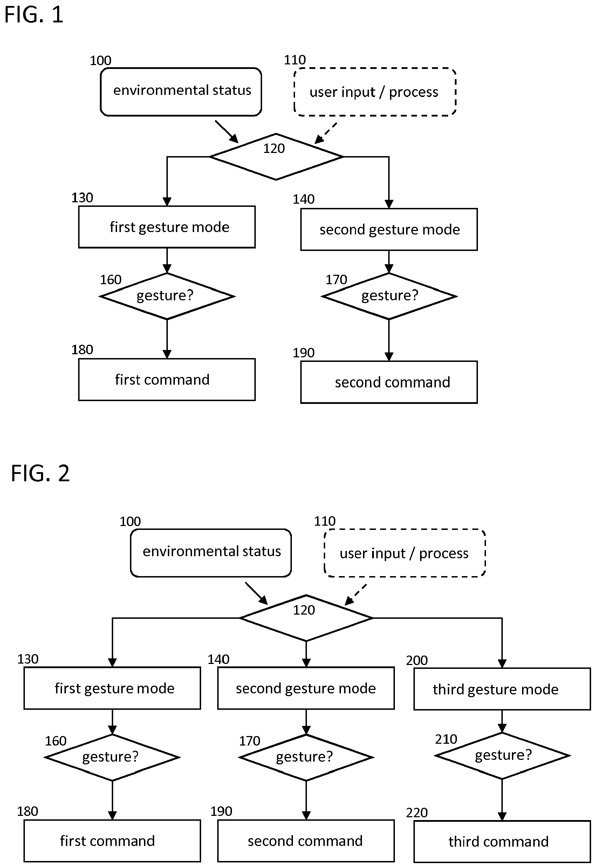

Figure 1 shows a flowchart of an exemplary implementation of a method for gesture based human-machine interaction, HMI, according to the improved concept.

An environmental status of an electronic device D is determined in block 100. In block 120, is determined whether at least one condition for a first gesture mode or at least one condition for a second gesture mode is fulfilled. Therein, the at least one condition for the first gesture mode depends on the environmental status.

The at least one condition for the second gesture mode may or may not depend on the environmental status. Alternatively or in addition, the at least one condition for the first gesture mode and/or the at least one condition for the second gesture mode may depend on a user input or on a process on the electronic device D, as indicated in block 110.

If the at least one condition for the first gesture mode is fulfilled, the electronic device D is operated in the first gesture mode as indicated in block 130. When operating in the first gesture mode, detection of gestures of a first set of gestures is enabled. Each of the gestures of the first set of gestures has an associated first command of the electronic device D. If, when operating in the first gesture mode, a movement of an object 0 is detected by the electronic device D, in particular by a gesture sensor GS of the electronic device D, it is determined in block 160 whether the detected movement corresponds to a gesture of the first set of gestures. If this is the case, the first command associated to the gesture corresponding to the detected movement is carried out in block 180.

If, on the other hand, the at least one condition for the second gesture mode is fulfilled, the electronic device D is operated in the second gesture mode as indicated in block 140. Therein, the at least one condition for the first and the at least one condition for the second gesture mode may for example exclude each other, such that they cannot be fulfilled at the same time. When operating in the second gesture mode, detection of gestures of a second set of gestures is enabled. Each of the gestures of the second set of gestures has an associated second command of the electronic device D. The second set may for example comprise gestures that are comprised also by the first set and may comprise gestures that are not comprised by the first set and vice versa.

If, when operating in the second gesture mode, a movement of an object is detected, it is determined in block 170 whether the detected movement corresponds to a gesture of the second set of gestures. If this is the case, the second command associated to the gesture corresponding to the detected movement is carried out in block 190.

The environmental status comprises information about various sensor inputs of the electronic device D. These include at least one of speed information, for example GPS speed information, position information, for example GPS position information, and acceleration information, and may further include heart rate information, in particular of a user of the electronic device D, or other sensor inputs. Therein, the sensor inputs may for example be generated by further sensors SF1, SF2 of the electronic device.

The environmental status may for example also comprise a connection status of the electronic device D, for example a Bluetooth connection status of the electronic device D. According to the invention, the environmental status comprises a connection status, for example a Bluetooth connection status, of the electronic device D with the vehicle and/or a component of the vehicle.

For example a sensor input generated by one of the further sensors SF1, SF2 or a combination of sensor inputs generated by two or more sensors, such as the further sensors SF1, SF2, may be used to determine whether the at least one condition for the first gesture mode and/or the at least one condition for second gesture mode is fulfilled.

One of the first and the second gesture mode corresponds to a driving mode. That is, the electronic device D is for example operated in the driving mode, if the environmental status, a user input and/or a process on the electronic device D indicates that the electronic device D is presently located in a vehicle such as a car, in particular a driving vehicle. The electronic device D may for example be a portable electronic device such as a mobile phone or a tablet computer or a wearable electronic device such as a smart watch worn for example by the driver or passenger of the vehicle.

To determine whether the at least one condition for the driving mode may is fulfilled, it may for example be determined whether a speed, for example a speed of the vehicle and/or the electronic device, is greater than a driving threshold speed. Alternatively or in addition, an acceleration being greater or smaller than a driving threshold acceleration may contribute to the decision whether the at least one condition for the driving mode is fulfilled. Alternatively or in addition, the acceleration, speed and/or position may be compared to at least one predefined pattern for determining whether the at least one condition for the driving mode is fulfilled.

According to the invention, it is determined whether the electronic device D is connected for example via Bluetooth, to the vehicle or a component of the vehicle, for example an audio system or an infotainment system of the vehicle, to decide whether the at least one condition for driving mode is fulfilled.

Furthermore, in some implementations, the at least one condition for the driving mode may for example be fulfilled only if the driving mode is generally enabled, for example enabled by a user input. For example, if all conditions for the driving mode are fulfilled except for a general enabling, the electronic device D may not be operated in the driving mode.

When operating in the driving mode, detection of gestures of a driving set of gestures is enabled. The gestures of the driving set may for example be associated to commands of the electronic device D for example including commands supported by a Bluetooth profile supported by the vehicle or any other input/output device connected to the vehicle and/or the electronic device D, such as a Bluetooth headset. Alternatively or in addition, gestures of the driving set of gestures may be associated to commands for controlling components of the electronic device D, in particular integrated into the electronic device D.

Commands associated to gestures of the driving set of gestures may serve for increasing or decreasing a volume of an audio component integrated into or coupled to the electronic device D and/or the vehicle. Alternatively or in addition, commands associated to gestures of the driving set of gestures may serve for selecting a file, in particular an audio or video file to be played by the electronic device and/or an audio system of the vehicle or for picking up and/or rejecting a telephone call, in particular if the electronic device D is implemented as a mobile phone. Alternatively or in addition, commands associated to gestures of the driving set of gestures may serve for controlling a navigation program on the electronic device D and/or a navigation system of the vehicle.

One of the first and the second gesture mode may for example correspond to a running mode. That is, the electronic device D is for example operated in the running mode, if the environmental status, a user input and/or a process on the electronic device D indicates that a user of the electronic device D is presently running or jogging. The electronic device D may for example be a portable electronic device such as a mobile phone or a wearable electronic device such as a smart watch or a smart wristband worn for example by the user of the electronic device D.

To determine whether the at least one condition for the running mode may is fulfilled, it may for example be determined whether a speed, for example a running speed of the user and/or the electronic device D, is greater than a running threshold speed. Alternatively or in addition, an acceleration being greater or smaller than a running threshold acceleration may contribute to the decision whether the at least one condition for the driving mode is fulfilled. Alternatively or in addition, a heart rate of the user of the electronic device D may be determined and for example be compared to a threshold heart rate to determine whether the at least one condition for the running mode is fulfilled.

Alternatively or in addition, the acceleration, speed, position and/or heartrate may be compared to predefined patterns for determining whether the at least one condition for the running mode is fulfilled.

Furthermore, the at least one condition for the running mode may for example be fulfilled only if the running mode is generally enabled, for example enabled by a user input. For example, if all conditions for the running mode are fulfilled except for a general enabling, the electronic device D may not be operated in the running mode.

Gestures of a running set of gestures may for example be associated to commands of the electronic device D including for example commands for controlling components of the electronic device D, in particular integrated into or coupled to the electronic device D.

Commands associated to gestures of the running set of gestures may for example include an API command of the electronic device's operating system.

Commands associated to gestures of the running set of gestures may serve for increasing or decreasing a volume of an audio component integrated into or coupled to the electronic device D, for example a headphone or a loudspeaker. Alternatively or in addition, commands associated to gestures of the first of gestures may serve for selecting a file, in particular an audio file to be played by the electronic device D or for picking up and/or rejecting a telephone call, in particular if the electronic device D is implemented as a mobile phone.

One of the first and the second gesture mode may for example correspond to a gaming mode. That is, the electronic device D is for example operated in the gaming mode, if the environmental status, a user input and/or a process on the electronic device D indicates that the user of the electronic device D is presently using a program, in particular is playing a game, on the electronic device D or a further electronic device, such as a game console, coupled to the electronic device. The electronic device D may for example be a portable electronic device such as a mobile phone or a wearable electronic device such as a smart watch or a smart wristband worn for example by the user of the electronic device D.

To determine whether the at least one condition for the gaming mode may is fulfilled, the acceleration, speed, position may be compared to predefined patterns for determining whether the at least one condition for the gaming mode is fulfilled.

Alternatively or in addition, it may be determined whether a certain application, program and/or process, such as a game, is running or is being executed or started on the electronic device D or the further electronic device to determine whether the at least one condition for the gaming mode is fulfilled.

Furthermore, the at least one condition for the gaming mode may for example be fulfilled only if the gaming mode is generally enabled, for example enabled by a user input. For example, if all conditions for the gaming mode are fulfilled except for a general enabling, the electronic device D may not be operated in the gaming mode.

Gestures of a gaming set of gestures may for example be associated to commands of the electronic device D including for example commands for controlling components of the electronic device D and/or the further electronic device.

Commands associated to gestures of the gaming set of gestures may for example include an HMI API command of the electronic device's operating system.

Commands associated to gestures of the gaming set of gestures may serve for carrying out specific actions within the game, application, program or process running on the electronic device D or the further electronic device. These specific actions may include moving, for example moving to the left or right, jumping, crawling, shooting a weapon or the like of a game character of the game being executed on the electronic device D or the further electronic device.

In the method described with respect to Figure 1, the first gesture mode may for example correspond to the driving mode, while the second gesture mode may correspond to the running mode, the gaming mode or another gesture mode. Alternatively, the first gesture mode may correspond to the running mode, while the second gesture mode may correspond to the driving mode, the gaming mode or another gesture mode. Alternatively, the first gesture mode may correspond to the gaming mode, while the second gesture mode may correspond to the driving mode, the running mode or another gesture mode.

Figure 2 shows a flowchart of a further exemplary implementation of a method for gesture based human-machine interaction according to the improved concept based on the method of Figure 1.

In addition to the method of Figure 1, the method of Figure 2 includes, in block 120, determining whether at least one condition for a third gesture mode is fulfilled. The at least one condition for the third gesture mode may or may not depend on the environmental status. Alternatively or in addition, the at least one condition for the third gesture mode may depend on a user input or on a process on the electronic device D, as indicated in block 110.

If the at least one condition for the third gesture mode is fulfilled, the electronic device D is operated in the third gesture mode as indicated in block 200. When operating in the third gesture mode, detection of gestures of a third set of gestures is enabled. Each of the gestures of the third set of gestures has an associated third command of the electronic device. If, when operating in the third gesture mode, a movement of the object is detected by the electronic device D, it is determined in block 210 whether the detected movement corresponds to a gesture of the third set of gestures. If this is the case, the third command associated to the gesture corresponding to the detected movement is carried out in block 220.

In the method described with respect to Figure 2, the first gesture mode may for example correspond to the driving mode, while the second and the third gesture modes may correspond to the running mode and the gaming mode, respectively. Alternatively, the first gesture mode may correspond to the running mode, while the second and the third gesture modes may correspond to the driving mode and the gaming mode, respectively. Alternatively, the first gesture mode may correspond to the gaming mode, while the second and the third gesture modes may correspond to the driving mode and the running mode, respectively.

In alternative implementations of the method, there may be further gesture modes besides the first, second and third gesture modes. It is readily derived by a person skilled in the art how to generalize the improved concept accordingly in this case.

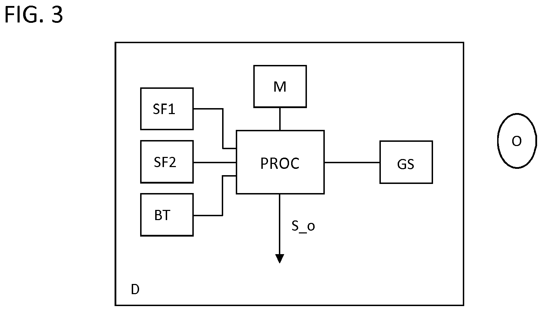

Figure 3 shows a block diagram of an exemplary implementation of a portable electronic device D according to the improved concept.

The electronic device D comprises a HMI system with a processing unit PROC and a gesture sensor GS connected to the processing unit PROC. The HMI system further comprises a first and a second further sensor SF1, SF2 connected to the processing unit PROC, a connection interface BT, for example a Bluetooth interface, connected to the processing unit PROC and a storage device M connected to the processing unit PROC. The storage device M may optionally be implemented in the processing unit.

The first and the second further sensor SF1, SF2 and the connection interface BT are configured to determine the environmental status of the electronic device D. The first further sensor SF1 is for example implemented as a GPS sensor, while the second further sensor SF2 may be implemented as an acceleration sensor. Consequently, the first further sensor SF1 is for example configured to determine a location and/or speed of the electronic device D, a user of the electronic device D and/or a vehicle the electronic device D is located in, such as a car. The connection interface BT is for example configured to determine a connection status, for example the Bluetooth connection status of the electronic device D for example with the car or a component of the vehicle.

The processing unit PROC is for example implemented as a processor of the electronic device D, for example the processor of a mobile phone, or as a microcontroller. The processing unit PROC is configured to operate in one of at least two gesture modes, for example the first and/or the second gesture mode, depending on the environmental status as described earlier. When operating in the first gesture mode, the processing unit PROC enables the first set of gestures. Therein, the first set of gestures may for example be stored in the storage device M.

The gesture sensor GS is configured to detect a movement of the object O. when operating in the first gesture mode, the processing unit PROC is configured to determine if the detected movement corresponds to a gesture of the first set of gestures. If the detected movement corresponds to a gesture of the first set of gestures, the processing unit PROC is further configured to carry out a first command of the electronic device D associated to the gesture corresponding to the detected movement.

To this end, the processing unit PROC may be configured to generate an output signal S_o representing the first command. The output signal S_o may for example correspond to a software command for the electronic device D. alternatively or in addition, the output signal S_o may represent a control signal for an actuator, in particular a physical actuator, comprised by or connected to the electronic device D. The first command and/or information about the assignment of the gestures of the first set of gestures to respective first command may for example be stored on the storage device M.

By means of the HMI system, the electronic device D can be used to carry out any of the methods according to the improved concept described herein.

It is highlighted that, alternatively or in addition to the further sensors SF1, SF2, the electronic device D may comprise more sensors that are configured to determine additional aspects of the environmental condition. Analogously, the electronic device D may comprise further connection interfaces alternatively or in addition to the connection interface BT. The further connection interfaces may be configured to determine further connection statuses of the electronic device D that may contribute to the environmental condition.

By means of a method, an electronic device D and/or an HMI system according to the improved concept, gesture-based HMI for devices like mobile phones, tablets or wearables, may become smarter and more adapted to the user environment. In particular, gesture based HMI may be enabled for appliances that natively do not have implemented gesture based HMI. For example, for a vehicle like a car without gesture based HMI, gesture based HMI may be enable via an electronic device, for example a smartphone, according to the improved concept.

Various sets of gestures may be enabled in a given gestures mode by the device. The determination of the gesture mode may be automatic using a sensor fusion algorithm or may be user-configured.

For example by using the improved concept in combination with an electronic device D within a vehicle such as a car, an aftersales enablement of gesture-based HMI for a vehicle's infotainment system may be achieved. In a sense, the electronic device D, for example smart phone, may become a legal infotainment system in the vehicle. The electronic device D may for example be held in a cradle or in a cup holder of the vehicle, for example in an armrest of the vehicle.

Thanks to the use of sensor fusion, the selection of gesture modes may be made automatic. The use of various gesture modes may enable a variety of different sets of gestures adapted to an environment of the user of the electronic device D.

## Claims

1. Method for gesture based human-machine interaction comprising
- determining an environmental status of an electronic device (D);
- operating the electronic device (D) in one of at least two gesture modes depending on the environmental status, wherein, during a first gesture mode of the at least two gesture modes, detection of gestures of a first set of gestures is enabled;
- detecting a movement of an object (O) carrying out the gesture and located in the vicinity of the electronic device; and
- when operating in the first gesture mode and if the detected movement corresponds to a gesture of the first set of gestures, carrying out a first command of the electronic device (D) associated to the gesture corresponding to the detected movement;
wherein
- one of the first and the second gesture mode corresponds to a driving mode;
- the environmental status comprises at least one connection status of the electronic device (D) with a vehicle and/or with a component of the vehicle;
- the environmental status further comprises information about one or more quantities measured by one or more further sensors (SF1, SF2) coupled to or comprised by the electronic device (D);
- the electronic device is operated in the driving mode if at least one condition for the driving mode is fulfilled;
- the at least one condition for the driving mode depends on the at least one connection status indicating that the electronic device (D) is connected with the vehicle and/or with the component of the vehicle;
- the at least one condition for the driving mode further depends on the information about the one or more measured quantities; and
- the information about the one or more measured quantities comprises at least one of the following information on the electronic device (D):
- speed information, in particular GPS speed information;
- position information, in particular GPS position information;
- acceleration information.

2. Method according to claim 1, wherein, during a second gesture mode of the at least two gesture modes, detection of gestures of a second set of gestures is enabled.

3. Method according to claim 2, further comprising operating the electronic device (D) in the second gesture mode if at least one condition for the second gesture mode is fulfilled.

4. Method according to claim 3, wherein the at least one condition for the second gesture mode depends on at least one of the following:
- the environmental status;
- a user input to the electronic device (D); and
- a status of a process on the electronic device (D).

5. Method according to one of claims 2 to 4, wherein the first set of gestures comprises at least one gesture that is not comprised by the second set of gestures and/or vice versa.

6. Method according to one of claims 2 to 5, further comprising, when operating in the second gesture mode and if the detected movement corresponds to a gesture of the second set of gestures, carrying out a second command of the electronic device associated to the gesture corresponding to the detected movement.

7. Method according to claim 6, wherein
- at least one common gesture is comprised by the first set of gestures and by the second set of gestures; and
- the first command associated to the at least one common gesture is different from the second command associated to the at least one com on gesture.

8. Method according to one of claims 1 to 7, wherein, one of the at least two gesture modes is a deactivation mode and detection of gestures is disabled during the deactivation mode.

9. Gesture based human-machine interface, HMI, system for an electronic device (D), the HMI system comprising
- at least one input unit (SF1, SF2, BT) configured to determine an environmental status of the electronic device (D) ;
- a gesture sensor (GS) configured to detect a movement of an object (O) carrying out the gesture and located in the vicinity of the electronic device; and
- a processing unit (PROC) configured to
- operate in one of at least two gesture modes depending on the environmental status;
- enable detection of gestures of a first set of gestures during a first gesture mode of the at least two gesture modes;
- when operating in the first gesture mode, determine if the detected movement corresponds to a gesture of the first set of gestures; and
- if the detected movement corresponds to a gesture of the first set of gestures, carry out a first command of the electronic device (D) associated to the gesture corresponding to the detected movement
wherein
- one of the first and the second gesture mode corresponds to a driving mode;
- the environmental status comprises at least one connection status of the electronic device (D) with a vehicle and/or with a component of the vehicle;
- the environmental status further comprises information about one or more quantities measured by one or more further sensors (SF1, SF2) comprised by the at least one input unit;
- the processing unit (PROC) operates the electronic device in the driving mode if at least one condition for the driving mode is fulfilled;
- the at least one condition for the driving mode depends on the at least one connection status indicating that the electronic device (D) is connected with the vehicle and/or with the component of the vehicle;
- the at least one condition for the driving mode further depends on the information about the one or more measured quantities; and
- the information about the one or more measured quantities comprises at least one of the following information on the electronic device (D):
- speed information, in particular GPS speed information;
- position information, in particular GPS position information;
- acceleration information.

10. HMI system according to claim 9, wherein the processing unit (PROC) is further configured to enable detection of gestures of a second set of gestures during a second gesture mode of the at least two gesture modes.

11. Portable electronic device with a gesture based human-machine interface, HMI, system according to one of claims 9 or 10.

## Patentansprüche

1. Verfahren zur gestenbasierten Mensch-Maschine-Interaktion, umfassend
- Bestimmen eines Umgebungszustands eines elektronischen Geräts (D);
- Betreiben des elektronischen Geräts (D) in einem von mindestens zwei Gestenmodi in Abhängigkeit von dem Umgebungsstatus, wobei während eines ersten Gestenmodus der mindestens zwei Gestenmodi die Erfassung von Gesten eines ersten Satzes von Gesten aktiviert wird;
- Erfassen einer Bewegung eines Objekts (O), das die Geste ausführt und sich in der Nähe des elektronischen Geräts (D) befindet; und
- wenn im ersten Gestenmodus betrieben wird und wenn die erfasste Bewegung einer Geste des ersten Satzes von Gesten entspricht, Ausführen eines ersten Befehls des elektronischen Geräts (D), der der Geste zugeordnet ist, die der erfassten Bewegung entspricht;
wobei
- einer von dem ersten und dem zweiten Gestenmodus einem Fahrmodus entspricht;
- der Umgebungsstatus mindestens einen Verbindungsstatus des elektronischen Geräts (D) mit einem Fahrzeug und/oder mit einer Komponente des Fahrzeugs umfasst;
- der Umgebungsstatus ferner Informationen über eine oder mehrere Größen umfasst, die von einem oder mehreren weiteren Sensoren (SF1, SF2) gemessen werden, die mit dem elektronischen Gerät (D) gekoppelt sind oder von diesem umfasst werden;
- das elektronische Gerät im Fahrmodus betrieben wird, wenn mindestens eine Bedingung für den Fahrmodus erfüllt ist;
- die mindestens eine Bedingung für den Fahrmodus von dem mindestens einen Verbindungsstatus abhängt, der anzeigt, dass das elektronische Gerät (D) mit dem Fahrzeug und/oder mit der Komponente des Fahrzeugs verbunden ist;
- die mindestens eine Bedingung für den Fahrmodus ferner von der Information über die eine oder die mehreren gemessenen Größen abhängt; und
- die Information über die eine oder die mehreren gemessenen Größen mindestens eine der folgenden Informationen über das elektronische Gerät (D) umfasst:
- Geschwindigkeitsinformationen, insbesondere GPS-Geschwindigkeitsinformationen;
- Positionsinformationen, insbesondere GPS-Positionsinformationen;
- Informationen über die Beschleunigung.

2. Verfahren nach Anspruch 1, wobei während eines zweiten Gestenmodus der mindestens zwei Gestenmodi die Erkennung von Gesten eines zweiten Satzes von Gesten aktiviert wird.

3. Verfahren nach Anspruch 2, ferner umfassend das Betreiben des elektronischen Geräts (D) im zweiten Gestenmodus, wenn mindestens eine Bedingung für den zweiten Gestenmodus erfüllt ist.

4. Verfahren nach Anspruch 3, wobei die mindestens eine Bedingung für den zweiten Gestenmodus von mindestens einem der folgenden abhängt:
- dem Umgebungszustand;
- einer Benutzereingabe an das elektronische Gerät (D); und
- einem Status eines Prozesses auf dem elektronischen Gerät (D) .

5. Verfahren nach einem der Ansprüche 2 bis 4, wobei der erste Satz von Gesten mindestens eine Geste umfasst, die nicht im zweiten Satz von Gesten enthalten ist und/oder umgekehrt.

6. Verfahren nach einem der Ansprüche 2 bis 5, ferner umfassend, wenn im zweiten Gestenmodus betrieben wird und die erfasste Bewegung einer Geste des zweiten Satzes von Gesten entspricht, das Ausführen eines zweiten Befehls des elektronischen Geräts, der der der erfassten Bewegung entsprechenden Geste zugeordnet ist.

7. Verfahren nach Anspruch 6, wobei
- mindestens eine gemeinsame Geste von dem ersten Satz von Gesten und dem zweiten Satz von Gesten umfasst ist; und
- der erste Befehl, der zu der mindestens einen gemeinsamen Geste zugeordnet ist, sich von dem zweiten Befehl unterscheidet, der zu der mindestens einen gemeinsamen Geste zugeordnet ist.

8. Verfahren nach einem der Ansprüche 1 bis 7, wobei einer der mindestens zwei Gestenmodi ein Deaktivierungsmodus ist und die Erfassung von Gesten während des Deaktivierungsmodus deaktiviert ist.

9. Gestenbasiertes Mensch-Maschine-Schnittstellen-, HMI-, System für ein elektronisches Gerät (D), wobei das HMI-System Folgendes umfasst
- mindestens eine Eingabeeinheit (SF1, SF2, BT), die eingerichtet ist, um einen Umgebungszustand des elektronischen Geräts (D) zu bestimmen;
- einen Gestensensor (GS), der eingerichtet ist, um eine Bewegung eines Objekts (O) zu erfassen, das die Geste ausführt und sich in der Nähe des elektronischen Geräts (D) befindet; und
- eine Verarbeitungseinheit (PROC), die eingerichtet ist,
- in einem von mindestens zwei Gestenmodi in Abhängigkeit vom Umgebungsstatus zu arbeiten;
- das Erfassen von Gesten eines ersten Satzes von Gesten während eines ersten Gestenmodus der mindestens zwei Gestenmodi zu ermöglichen;
- beim Betrieb im ersten Gestenmodus zu bestimmen, ob die erfasste Bewegung einer Geste des ersten Satzes von Gesten entspricht; und
- wenn die erfasste Bewegung einer Geste des ersten Satzes von Gesten entspricht, einen ersten Befehl des elektronischen Geräts (D) auszuführen, der der Geste zugeordnet ist, die der erfassten Bewegung entspricht wobei
- einer von dem ersten und dem zweiten Gestenmodus einem Fahrmodus entspricht;
- der Umgebungsstatus mindestens einen Verbindungsstatus des elektronischen Geräts (D) mit einem Fahrzeug und/oder mit einer Komponente des Fahrzeugs umfasst;
- der Umgebungsstatus ferner Informationen über eine oder mehrere Größen umfasst, die von einem oder mehreren weiteren Sensoren (SF1, SF2) gemessen werden, die von der mindestens einen Eingabeeinheit umfasst werden;
- die Verarbeitungseinheit (PROC) das elektronische Gerät in dem Fahrmodus betreibt, wenn mindestens eine Bedingung für den Fahrmodus erfüllt ist;
- die mindestens eine Bedingung für den Fahrmodus von dem mindestens einen Verbindungsstatus abhängt, der anzeigt, dass das elektronische Gerät (D) mit dem Fahrzeug und/oder mit der Komponente des Fahrzeugs verbunden ist;
- die mindestens eine Bedingung für den Fahrmodus ferner von der Information über die eine oder die mehreren Messgrößen abhängt; und
- die Information über die eine oder die mehreren gemessenen Größen mindestens eine der folgenden Informationen über das elektronische Gerät (D) umfasst:
- Geschwindigkeitsinformationen, insbesondere GPS-Geschwindigkeitsinformationen;
- Positionsinformationen, insbesondere GPS-Positionsinformationen;
- Informationen über die Beschleunigung.

10. HMI-System nach Anspruch 9, wobei die Verarbeitungseinheit (PROC) ferner eingerichtet ist, die Erkennung von Gesten eines zweiten Satzes von Gesten während eines zweiten Gestenmodus der mindestens zwei Gestenmodi zu ermöglichen.

11. Tragbares elektronisches Gerät mit einem gestenbasierten Mensch-Maschine-Schnittstellen-, HMI-, System nach einem der Ansprüche 9 oder 10.

## Revendications

1. Méthode d'interaction homme-machine basée sur le geste comprenant
- déterminer un état environnemental d'un dispositif électronique (D) ;
- faire fonctionner le dispositif électronique (D) dans l'un d'au moins deux modes gestuels en fonction de l'état de l'environnement, dans lequel, au cours d'un premier mode gestuel des deux modes gestuels au moins, la détection des gestes d'un premier ensemble de gestes est activée ;
- détecter un mouvement d'un objet (O) effectuant le geste et situé à proximité du dispositif électronique (D) ; et
- lors du fonctionnement dans le premier mode gestuel et si le mouvement détecté correspond à un geste du premier ensemble de gestes, exécution d'une première commande du dispositif électronique (D) associée au geste correspondant au mouvement détecté ;
dans lequel
- l'un du premier et du deuxième mode gestuel correspond à un mode de conduite ;
- l'état environnemental comprend au moins un état de connexion du dispositif électronique (D) avec un véhicule et/ou avec un composant du véhicule ;
- l'état environnemental comprend en outre des informations relatives à une ou plusieurs grandeurs mesurées par un ou plusieurs autres capteurs (SF1, SF2) couplés au dispositif électronique (D) ou compris par celui-ci ;
- le dispositif électronique est utilisé en mode de conduite si au moins une condition du mode de conduite est remplie ;
- l'au moins une condition du mode de conduite dépend de l'au moins un état de connexion indiquant que le dispositif électronique (D) est connecté au véhicule et/ou au composant du véhicule ;
- l'au moins une condition du mode de conduite dépend en outre des informations relatives à une ou plusieurs grandeurs mesurées ; et
- les informations sur la ou les quantités mesurées comprennent au moins l'une des informations suivantes sur le dispositif électronique (D) :
- informations sur la vitesse, en particulier informations sur la vitesse GPS ;
- informations sur la position, en particulier les informations sur la position GPS
- informations sur l'accélération.

2. Méthode selon la revendication 1, dans laquelle, lors d'un deuxième mode gestuel des au moins deux modes gestuels, la détection des gestes d'un deuxième ensemble de gestes est activée.

3. Méthode selon la revendication 2, comprenant en outre le fonctionnement du dispositif électronique (D) dans le deuxième mode gestuel si au moins une condition du deuxième mode gestuel est remplie.

4. Méthode selon la revendication 3, dans laquelle l'au moins une condition pour le second mode gestuel dépend d'au moins un des éléments suivants :
- l'état environnemental ;
- une entrée de l'utilisateur dans le dispositif électronique (D) ; et
- l'état d'un processus sur le dispositif électronique (D).

5. Méthode selon l'une des revendications 2 à 4, dans laquelle le premier ensemble de gestes comprend au moins un geste qui n'est pas compris par le deuxième ensemble de gestes et/ou vice versa.

6. Méthode selon l'une des revendications 2 à 5, comprenant en outre, lors du fonctionnement dans le deuxième mode gestuel et si le mouvement détecté correspond à un geste du deuxième ensemble de gestes, l'exécution d'une deuxième commande du dispositif électronique associée au geste correspondant au mouvement détecté.

7. Méthode selon la revendication 6, dans laquelle
- au moins un geste commun est compris dans le premier ensemble de gestes et dans le deuxième ensemble de gestes ; et
- la première commande associée à l'au moins un geste commun est différente de la deuxième commande associée à l'au moins un geste commun.

8. Méthode selon l'une des revendications 1 à 7, dans laquelle, l'un des au moins deux modes gestuels est un mode de désactivation et la détection des gestes est désactivée pendant le mode de désactivation.

9. Système d'interface homme-machine (IHM) basé sur le geste pour un dispositif électronique (D), le système IHM comprenant
- au moins une unité d'entrée (SF1, SF2, BT) configurée pour déterminer un état environnemental du dispositif électronique (D) ;
- un capteur de geste (GS) configuré pour détecter un mouvement d'un objet (O) réalisant le geste et situé à proximité du dispositif électronique (D) ; et
- une unité de traitement (PROC) configurée pour
- fonctionner dans l'un des deux modes gestuels au moins, en fonction de l'état de l'environnement ;
- permettre la détection des gestes d'un premier ensemble de gestes au cours d'un premier mode gestuel des deux modes gestuels au moins ;
- lors du fonctionnement dans le premier mode gestuel, déterminer si le mouvement détecté correspond à un geste du premier ensemble de gestes ; et
- si le mouvement détecté correspond à un geste du premier ensemble de gestes, exécuter une première commande du dispositif électronique (D) associée au geste correspondant au mouvement détecté
dans lequel
- l'un du premier et du deuxième mode gestuel correspond à un mode de conduite ;
- l'état environnemental comprend au moins un état de connexion du dispositif électronique (D) avec un véhicule et/ou avec un composant du véhicule ;
- l'état environnemental comprend en outre des informations relatives à une ou plusieurs grandeurs mesurées par un ou plusieurs autres capteurs (SF1, SF2) compris par l'au moins une unité d'entrée ;
- l'unité de traitement (PROC) fait fonctionner le dispositif électronique en mode de conduite si au moins une condition pour le mode de conduite est remplie ;
- l'au moins une condition pour le mode de conduite dépend de l'au moins un état de connexion indiquant que le dispositif électronique (D) est connecté au véhicule et/ou au composant du véhicule ;
- l'au moins une condition du mode de conduite dépend en outre des informations relatives à une ou plusieurs grandeurs mesurées ; et
- les informations sur la ou les quantités mesurées comprennent au moins l'une des informations suivantes sur le dispositif électronique (D) :
- informations sur la vitesse, en particulier informations sur la vitesse GPS ;
- informations sur la position, en particulier les informations sur la position GPS
- informations sur l'accélération.

10. Système IHM selon la revendication 9, dans lequel l'unité de traitement (PROC) est en outre configurée pour permettre la détection de gestes d'un deuxième ensemble de gestes pendant un deuxième mode gestuel des au moins deux modes gestuels.

11. Dispositif électronique portable avec un système d'interface homme-machine, IHM, à base de gestes selon l'une des revendications 9 ou 10.
